# FASCICULE DE BREVET EUROPEEN

(11) **EP 2 085 297 B1**
(45) Date de publication et mention de la délivrance du brevet: **05.10.2011**
(21) Numéro de dépôt: 09305064.9
(22) Date de dépôt: 23.01.2009
(51) Int. Cl.: B62D 25/16, B62D 65/16

(54) **Procédé de montage d'un bouclier et des élargisseurs de roue d'un véhicule automobile et agencement de montage obtenu**
Montageverfahren für einen Radschutz und verbreiterte Kotflügel eines Kraftfahrzeugs und so erhaltene Montageanordnung
Method of installing a face bar and wheel spreaders of an automobile and installation arrangement obtained

(30) Priorité: 29.01.2008 FR 0800455
(43) Date de publication de la demande: 05.08.2009
(73) Titulaire: Renault s.a.s., 92100 Boulogne-Billancourt (FR)
(72) Inventeur: Sueur, Eric, 91090, Lisses (FR); Le Duc, Francois, 92140, Clamart (FR); Grosdidier, Marc, 91650, Saint Yon (FR)

(56) Documents cités:
- EP-A- 1 826 103
- FR-A- 2 827 251
- US-A1- 2006 001 279
- US-A1- 2006 202 517

## Description

L'invention concerne un procédé de montage d'un bouclier et des élargisseurs de roue d'un véhicule automobile et l'agencement de montage obtenu.

On sait que l'indexage de position des boucliers et élargisseurs de roue d'un véhicule automobile est réalisé généralement par des pions, vis ou clips, ce qui peut demander un temps de pose des éléments relativement important. Le document EP 1826103 divulgue un procédé de montage d'un bouclier et une aile de véhicule.

L'invention a pour objet de faciliter le montage d'un bouclier de véhicule et des élargisseurs de roue attenants d'un véhicule automobile.

Il est en effet proposé selon l'invention un procédé de montage d'un bouclier et des élargisseurs de roue attenants d'un véhicule automobile, caractérisé en ce qu'il comporte les étapes suivantes :
- Fixer à la carrosserie du véhicule, à une position déterminée, une pièce de liaison dite presseur apte à permettre un positionnement et/ou une fixation au moins partielle dudit bouclier par une partie de sa surface, et de même un positionnement et/ou une fixation partielle d'un élargisseur de roue attenant par une autre partie de sa surface et
- positionner, et éventuellement fixer au moins partiellement, le bouclier et les élargisseurs de roue sur le presseur,
- réaliser la fixation définitive du bouclier et des élargisseurs de roue à la carrosserie du véhicule.

Plus précisément, le presseur est destiné à positionner et/ou fixer une partie d'extrémité supérieure du bouclier et à positionner et/ou fixer une partie d'extrémité de l'élargisseur, celui-ci étant en outre fixé par un autre moyen, par exemple collé par un adhésif double face à la carrosserie.

Ledit presseur peut être riveté à la carrosserie du véhicule, à une position latérale déterminée du véhicule, à l'avant ou à l'arrière de celui-ci selon qu'il s'agit d'un bouclier avant ou arrière respectivement.

Il peut comporter une première partie de position et/ou fixation apte à recevoir par clipsage ledit bouclier et de même une seconde partie de fixation apte à recevoir ledit élargisseur de roue, en sorte que ceux-ci se mettent en position aisément sur la carrosserie et se fixent rapidement, en référence au presseur, sur celle-ci.

Ladite première partie de position et/ou fixation du presseur peut être constituée par l'ensemble d'au moins une nervure de positionnement, voire une patte de clipsage, recevant une partie d'engagement complémentaire du bouclier et d'un élément de fixation du bouclier au presseur, par exemple une vis de fixation.

Ladite seconde partie de positionnement et/ou fixation peut être simplement au moins une nervure de positionnement de l'élargisseur recevant une partie d'engagement complémentaire du presseur, complété éventuellement au moins d'un moyen de fixation de l'élargisseur au presseur.

Avantageusement, après fixation du bouclier et dés élargisseurs de roue, une pièce de recouvrement peut être fixée sur le dit presseur, s'étendant sur celui-ci et entre l'élargisseur et le bouclier. Cette pièce de recouvrement peut être supprimée si le raccordement du bouclier à l'élargisseur de roue est continu et esthétique, recouvrant la pièce presseur.

Naturellement, l'invention concerne également l'agencement de montage obtenu mettant en oeuvre le procédé défini précédemment.

L'invention est illustrée ci-après à l'aide d'un exemple de réalisation et en référence aux dessins annexés, sur lesquels :
- La figure 1 est une vue en élévation d'un agencement d'un bouclier et d'un élargisseur de roue de véhicule automobile mis en position sur une pièce presseur selon l'invention.
- La figure 2 montre l'agencement complet de la figure 1 vu depuis l'intérieur du véhicule, et
- La figure 3 montre la fixation du bouclier sur la pièce presseur ; et
- La figure 4 montre la fixation de l'élargisseur de roue sur la pièce presseur.

Avec référence aux dessins, un agencement de montage d'un bouclier arrière 1 et d'un élargisseur de roue de côté 3 de véhicule automobile, véhicule automobile de sport notamment, est représenté.

Le bouclier 1 est tel que ses extrémités latérales sont attenantes à celles de l'élargisseur de roue de côté 3 de carrosserie du véhicule.

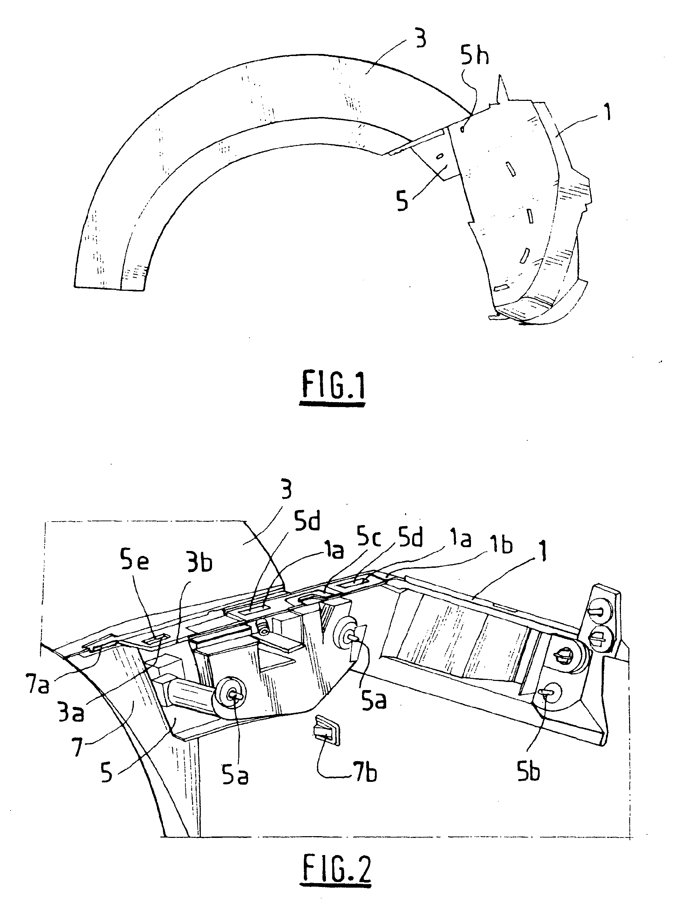

Cet agencement comporte une pièce de liaison, dite presseur 5, fixée à la carrosserie du véhicule (non représentée), sur le côté arrière de celui-ci, et une pièce de recouvrement ou enjoliveur 7 couvrant le presseur 5 (figure 2) en continuité des surfaces externes du bouclier 1 et de l'élargisseur de roue 3.

Cet enjoliveur 7 peut être fixé au moyen de pattes de fixation 7a, 7b à l'élargisseur de roue 3 et au bouclier 1, respectivement.

L'ensemble des pièces précitées est issu de moulage en matière plastique peinte ou en un autre matériau.

La pièce presseur 5 est à forme générale de L, étant fixée à la carrosserie du véhicule à l'extrémité arrière de celui-ci, à un positionnement précis déterminé, compatible pour le montage de l'élargisseur, et sur son côté longitudinal au moyen de deux rivets de fixation 5a et sur son côté arrière par un seul rivet de fixation 5b.

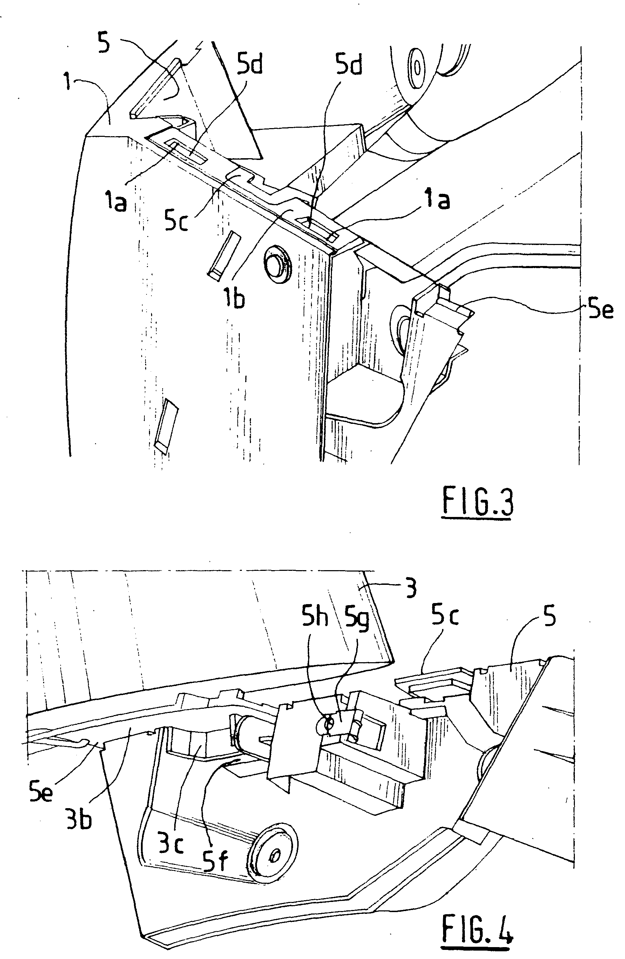

Cette pièce presseur 5 comporte sur son rebord supérieur 5c, côté longitudinal, deux pattes de fixation distantes en arête 5d, aptes à s'engager en clipsage dans deux lumières complémentaires 1a du rebord supérieur 1b côté longitudinal du bouclier, et une patte de fixation 5e, également en arête, à l'extrémité de son rebord, à savoir une troisième patte de fixation en arête apte à s'engager en clipsage dans une lumière complémentaire du rebord d'extrémité inférieur 3b de l'élargisseur 3. Elle comporte de plus sur la partie externe de son côté longitudinal une nervure à évidement en U 5f (figure 4) recevant un bossage en saillie 3c complémentaire de l'élargisseur à l'extrémité inférieure de celui-ci. Elle comporte encore une pince 5g pourvue d'un trou de perçage 5b par lequel le bouclier 1 une fois clippé sur la pièce presseur 5 grâce aux dites pattes de fixation précitées peut être fixé verrouillé à la pièce presseur 5 au moyen d'une vis de fixation (non représentée).

Le montage de l'agencement précité est à présent décrit. Il se déduit aisément de la description précédente. Il s'agit d'abord de fixer par rivetage, ainsi que précité, la pièce presseur 5 à la carrosserie du véhicule en la positionnant préalablement en des points d'indexage de position sur la carrosserie (non représentés). Le bouclier arrière 1 peut alors être clippé par ses extrémités latérales à la pièce presseur 5, puis fixé définitivement à la carrosserie du véhicule par des points de fixation mécaniques non représentés (vis de fixation), ceci sur la chaîne de fabrication du véhicule par exemple.

Les élargisseurs de roue 3 sont fixées ensuite, de façon indépendante de la chaîne de fabrication de préférence. Chacun de ceux-ci est positionné en référence à la pièce presseur 5 en engageant son bossage en U 3c dans l'évidement correspondant 5f de celle-ci et en engageant la patte de fixation correspondante du presseur. Il est alors collé à la carrosserie, par exemple au moyen d'un adhésif double face, dont on aura retiré préalablement la bande de protection, étant également fixé par son extrémité inférieure avant au niveau inférieure de la carrosserie (non représenté).

On fixe enfin la pièce enjoliveur 7 par ses pattes de fixation 7a, 7b pour obtenir l'agencement de montage fini. Naturellement, cette pièce enjoliveur 7 peut être supprimée si le raccordement du bouclier 1 à l'élargisseur de roue 3 est continu et esthétique, recouvrant la pièce presseur 5.

## Revendications

1. Procédé de montage d'un bouclier (1) et des élargisseurs de roue attenants (3) d'un véhicule automobile, **caractérisé en ce qu'**il comporte les étapes suivantes :
- fixer à la carrosserie du véhicule, à une position déterminée, une pièce de liaison dite presseur (5) apte à permettre un positionnement et/ou une fixation au moins partielle dudit bouclier (1) par une partie de sa surface, et de même un positionnement et/ou une fixation partielle d'un élargisseur de roue attenant (3) par une autre partie de sa surface et
- positionner, et éventuellement fixer au moins partiellement, le bouclier (1) et les élargisseurs de roue (3) sur le presseur (5),
- réaliser la fixation définitive du bouclier (1) et des élargisseurs de roue (3) à la carrosserie du véhicule.

2. Procédé de montage selon la revendication 1, tel que le presseur (5) est destiné à positionner et/ou fixer une partie d'extrémité supérieure (1b) du bouclier (1) et à positionner et/ou fixer une partie d'extrémité (3b) de l'élargisseur (3), celui-ci étant en outre fixé par un autre moyen, par exemple collé par un adhésif double face à la carrosserie.

3. Procédé de montage selon l'une des revendications 1, 2, tel que ledit presseur (5) est riveté à la carrosserie du véhicule, à une position latérale déterminée du véhicule, à l'avant ou à l'arrière de celui-ci selon qu'il s'agit d'un bouclier avant ou arrière (1) respectivement.

4. Procédé de montage selon l'une des revendications précédentes, tel que ledit presseur (5) comporte une première partie de position et/ou fixation (5d) apte à recevoir par clipsage ledit bouclier (1) et de même une seconde partie de fixation (5^{e}), (5f) apte à recevoir ledit élargisseur de roue (3), en sorte que ceux-ci se mettent en position aisément sur la carrosserie et se fixent rapidement, en référence au presseur (5), sur celle-ci.

5. Procédé de montage selon la revendication 4, tel que ladite première partie de position et/ou fixation (5d) du presseur (5) est constituée par l'ensemble d'au moins nervure de positionnement, voire une patte de clipsage (5d), recevant une partie d'engagement complémentaire (1a) du bouclier (1) et d'un élément de fixation du bouclier au presseur, par exemple une vis de fixation.

6. Procédé de montage selon la revendication 4, tel que ladite seconde partie de positionnement et/ou fixation (5^{e}), (5f) est au moins une nervure de positionnement (3c) de l'élargisseur (3) recevant une partie d'engagement complémentaire (5f) du presseur (5), complété éventuellement au moins d'un moyen de fixation (3a) de l'élargisseur (3) au presseur (5).

7. Procédé de montage selon la revendication 1, dans lequel, après fixation du bouclier et des élargisseurs de roue, une pièce de recouvrement (7) est fixée sur le dit presseur (5), s'étendant sur celui-ci et entre l'élargisseur (3) et le bouclier (1).tel que la pièce de recouvrement (7) peut être supprimée si le raccordement du bouclier (1) à l'élargisseur de roue (3) est continu et esthétique, recouvrant la pièce presseur (5).

## Claims

1. Method of installing a bumper (1) and contiguous wheel arch extenders (3) of a motor vehicle, **characterized in that** it comprises the following steps:
- attaching to the vehicle bodywork, at a given position, a connecting piece known as a presser (5) capable of allowing the said bumper (1) to be positioned and/or partially attached by a part of its surface and, at the same time, of allowing a contiguous wheel arch extender (3) to be positioned and/or at least partially attached via another part of its surface, and
- positioning, and possibly at least partially attaching, the bumper (1) and the wheel arch extenders (3) on the presser (5),
- definitively attaching the bumper (1) and the wheel arch extenders (3) to the vehicle bodywork.

2. Installation method according to claim 1, such that the presser (5) is intended to position and/or attach an upper end part (1b) of the bumper (1) and to position and/or attach an end part (3b) of the extender (3), the latter also being attached by another means, for example bonded using double-sided adhesive tape to the bodywork.

3. Installation, method according to one of Claims 1, 2, such that the said presser (5) is riveted to the vehicle bodywork, at a given lateral position of the vehicle, at the front or rear thereof depending on whether the bumper is respectively a front bumper or a rear bumper (1).

4. Installation method according to one of the preceding claims, such that the said presser (5) has a first positioning and/or attaching part (5d) to which the said bumper (1) can be attached by clipping and likewise has a second attaching part (5e), (5f) capable of accepting the said wheel arch extender (3) so that these items can easily be positioned on the bodywork and attached quickly, with reference to the presser (5), to said bodywork.

5. Installation method according to Claim 4, such that the said first positioning and/or attaching part (5d) of the presser (5) consists or the assembly of at least one positioning rib, or even a clip-fastening tab (5d), that accepts a complementary engagement part (1a) of the bumper (1) and of an element for attaching the bumper to the presser, for example a fixing screw.

6. Installation method according to Claim 4, such that the said second positioning and/or attaching part (5e), (5f) is at least one positioning rib (3c) of the extender (3) that accepts a complementary engagement part (5f) of the presser (5), possibly supplemented by at least once means (3a) of attaching the extender (3) to the presser (5).

7. Installation method according to Claim 1, in which, having attached the bumper and the wheel arch extenders, a cover piece (7) is fixed to said presser (5), extending over the latter and between the extended (3) and the bumper (1) such that the cover piece (7) can be omitted if the connection between the bumper (1) and the wheel arch extender (3) is continuous and aesthetic, covering the presser piece (5).

## Patentansprüche

1. Verfahren zur Montage einer Schutzleiste (1) und von angrenzenden Spurverbreiterungen (3) eines Kraftfahrzeugs, **dadurch gekennzeichnet**e dass es die folgenden Schritte umfasst:
- Befestigung eines als Andrücker (5) bezeichneten Verbindungsstücks, das geeignet ist, mindestens eine Teilpositionierung und/oder Teilbefestigung der Schutzleiste (1) mittels eines Teils seiner Fläche sowie eine Teilpositionierung und/oder Teilbefestigung einer angrenzenden Spurverbreiterung (3) mittels eines anderen Teils seiner Fläche zu gestatten, in einer bestimmten Position an der Karosserie des Fahrzeugs und
- Positionierung und gegebenenfalls mindestens Teilbefestigung der Schutzleiste (1) und der Spurverbreiterungen (3) am Andrücker (5), und
- Durchführung der endgültigen Befestigung der Schutzleiste (1) und der Spurverbreiterungen (3) an der Karosserie des Fahrzeugs.

2. Montageverfahren nach Anspruch 1, wobei der Andrücker (5) dazu bestimmt ist, einen oberen Endteil (1b) der Schutzleiste (1) zu positionieren und/oder zu befestigen und einen Endteil (3b) der Spurverbreiterung (3) zu positionieren und/oder zu befestigen, wobei diese außerdem durch ein anderes Mittel an der Karosserie befestigt, beispielsweise mit einem doppelseitigen Kleber angeklebt wird.

3. Montageverfahren nach Anspruch oder 2, wobei der Andrücker (5) in einer bestimmten seitlichen Position des Fahrzeugs vor oder hinter diesem, je nachdem, ob es sich um eine vordere bzw. hintere Schutzleiste (1) handelt, an die Karosserie des Fahrzeugs angenietet ist.

4. Montageverfahren nach einem der Vorhergehenden Ansprüche, wobei der Andrücker (5) einen ersten Positions- und/oder Befestigungsteil (5d), der geeignet ist, die Schutzleiste (1) eingerastet aufzunehmen, und einen zweiten Befestigungsteil (5e), (5f) umfasst, der geeignet ist, die Spurverbreiterung (3) aufzunehmen, so dass sich diese leicht an der Karosserie positionieren lassen und bezüglich des Andrückers (5) schnell an dieser befestigt werden können.

5. Montageverfahren nach Anspruch 4, wobei der erste Positions- und/oder Befestigungsteil (5d) des Andrückers (5) aus der Anordnung aus mindestens einer Positionierungsrippe, nämlich einer Einrastlasche (5d), die einen komplementären Eingriffsteil (1a) der Schutzleiste (1) aufnimmt, und einem Element zur Befestigung der Schutzleiste am Andrücker, beispielsweise einer Befestigungsschraube, besteht.

6. Montageverfahren nach Anspruch 4, wobei der zweite Positions- und/oder Befestigungsteil (5e), (5f) mindestens eine Positionierungsrippe (3c) der Spurverbreiterung (3) ist, die einen komplementären Eingriffsteil (5f) des Andrückers (5) aufnimmt, gegebenenfalls ergänzt durch mindestens ein nimmt, gegebenenfalls ergänzt durch mindestens ein Mittel (3a) zur Befestigung der Spurverbreiterung (3) am Andrucker (5).

7. Montageverfahren nach Anspruch 1, wobei nach der Befestigung der Schutzleiste und der Spurverbreiterungen ein Abdeckteil (7) am Andrücker (5) befestigt wird, das sich über diesen und zwischen der Spurverbreiterung (3) und der Schutzleiste (1) erstreckt, so dass das Abdeckteil (7) weggelassen werden kann, wenn die Verbindung der Schutsleiste (1) mit der Spurverbreiterung (3) durchgängig und ästhetisch ist und den Andrückteil (5) abdeckt.
